Europäisches Patentamt

European Patent Office

Office européen des brevets

(19)

(11) Numéro de publication : **0 035 436**
**B1**

(12) # FASCICULE DE BREVET EUROPÉEN

(45) Date de publication du fascicule du brevet :
08.02.84

(51) Int. Cl.³ : **H 04 N   5/22**

(21) Numéro de dépôt : **81400279.6**

(22) Date de dépôt : **23.02.81**

(54) **Système de télévision utilisant un code de repérage superposé à l'image.**

(30) Priorité : **04.03.80 FR 8004810**

(43) Date de publication de la demande :
**09.09.81 Bulletin 81/36**

(45) Mention de la délivrance du brevet :
**08.02.84 Bulletin 84/06**

(84) Etats contractants désignés :
**BE DE GB IT NL SE**

(56) Documents cités :
**US-A- 3 737 566**
**US-A- 3 885 217**
**US-A- 4 051 532**
**IBM TECHNICAL DISCLOSURE BULLETIN, vol. 13,
no. 11, avril 1971, NEW YORK (US) LAWRENCE et al.:
"Addressing method for remote television buffers",
page 3239**

(73) Titulaire : **Etablissement Public de Diffusion dit
"Télédiffusion de France"
21-27 rue Barbès
F-92120 Montrouge (FR)**

**L'Etat Français représenté par le Secrétaire d'Etat
aux Postes et Télécommunications
(Centre National d'Etudes des Télécommunications)
38-40 rue du Général Leclerc
F-92131 Issy-les-Moulineaux (FR)**

(72) Inventeur : **Degoulet, Gabriel
La Harelle
F-35160 Montfort/Meu (FR)**
Inventeur : **Gaucher, Gilbert
12, rue Jean Beaumanoir
F-35410 Chateaugiron (FR)**
Inventeur : **Gauthier, Christian
Le Boulais
F-35690 Acigne (FR)**

(74) Mandataire : **Mongrédien, André et al
c/o BREVATOME 25, rue de Ponthieu
F-75008 Paris (FR)**

EP 0 035 436 B1

Jouve, 18, rue St-Denis, 75001 Paris, France

## Système de télévision utilisant un code de repérage superposé à l'image

La présente invention a pour objet un système de télévision utilisant un code de repérage superposé à l'image. Elle trouve une application dans le domaine de la télévision.

Les nouveaux services de télévision tels que ANTIOPE (Acquisition Numérique et Télévisualisation d'Images Organisée en Pages d'Ecriture) ou EPEOS (Enregistrement Programmé des Emissions sur Ordres des Sources) conduisent à l'utilisation de repères destinés à marquer le déroulement des émissions (début et fin de programme par exemple).

De tels repères sont déjà utilisés, par exemple sous forme de pastilles sur les films des appareils de télécinéma ou sous forme d'un « piétage » sur la piste d'ordre des supports d'enregistrement.

Ces types de repères sont difficiles à mettre en œuvre et ils s'accommodent mal des difficultés d'exploitation que l'on rencontre en télédiffusion, comme les pannes ou débordements d'émissions en direct.

La présente invention a justement pour objet un système de télévision muni de tels moyens de repérage, mais qui ne présente pas ces inconvénients. En outre, le système de l'invention est particulièrement bien adapté aux nouveaux services mentionnés plus haut en ce sens qu'il permet de caractériser des instants de diffusion de données par le système DIDON (Diffusion de Données Numériques) qui est à la base de la mise en œuvre de ces services.

De façon précise, l'invention a pour objet un système de télévision comprenant un moyen pour superposer à l'une des images à téléviser un code de repérage et un décodeur apte à détecter la présence de ce code dans les images, ce système étant caractérisé en ce que ledit code de repérage est formé par une première bande verticale constituée d'une suite périodique de zones alternativement blanches et noires, cette bande étant située le long d'un des bords latéraux de l'image et par une seconde bande verticale constituée d'une suite de zones blanches ou noires s'étendant chacune sur une hauteur égale à la période de ladite suite formée par la première bande, cette seconde bande étant située le long de l'autre bord latéral de l'image, le signal vidéo correspondant à une image ayant reçu un tel code comprenant ainsi des signaux de noir ou de blanc situés en début et en fin de ligne de balayage, et en ce que le décodeur comprend un circuit pour détecter, dans le signal vidéo qu'il reçoit, la présence de signaux de blanc et de noir situés en début et en fin de ligne, et pour reconnaître, à partir des signaux ainsi détectés, la présence dudit code et émettre un ordre de commande.

De toute façon, les caractéristiques et avantages de l'invention apparaîtront mieux après la description qui suit d'exemples de réalisation donnés à titre explicatif et nullement limitatif. Cette description se réfère à des dessins annexés sur lesquels :

la figure 1 est un schéma synoptique d'une installation de télévision conforme à l'invention ;

la figure 2 illustre l'aspect d'une image contenant un code de repérage conforme à l'invention ;

la figure 3 illustre l'allure du signal vidéo correspondant à ce code de repérage ainsi que l'allure des signaux d'échantillonnage et de mémorisation utilisés au décodage ;

la figure 4 représente le schéma synoptique d'un circuit de décodage apte à reconnaître la présence d'un code dans un signal vidéo reçu.

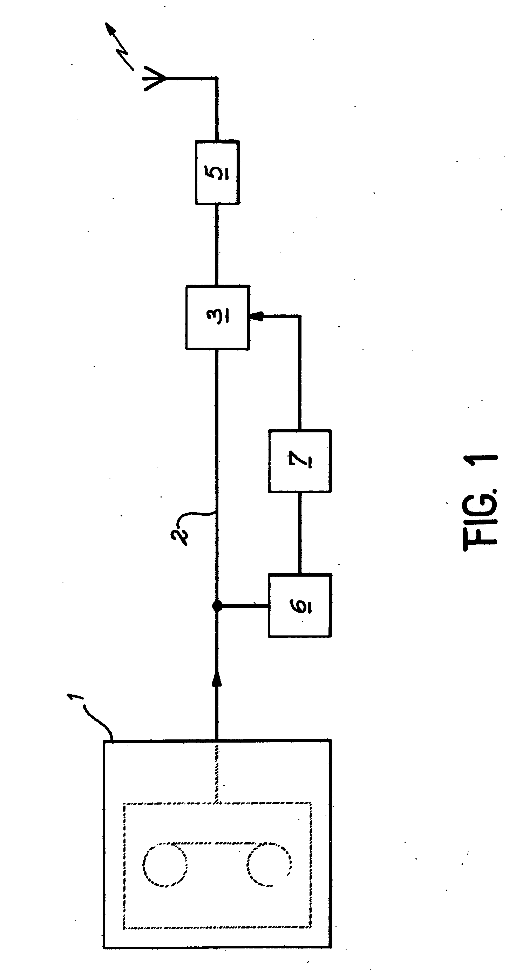

L'installation représentée sur la figure 1 comprend une source de signal vidéo 1 (composée par exemple d'un télécinéma) munie de moyens pour superposer à l'image à diffuser un code de repérage dont les caractéristiques seront décrites plus bas. Le signal vidéo est dirigé par une ligne 2 vers un multiplexeur DIDON 3, lequel alimente des organes de diffusion 5. Le signal vidéo est appliqué également à un décodeur 6 apte à reconnaître le code en question et à délivrer un ordre de commande à un organe 7, qui est par exemple une source numérique de données, relié au multiplexeur DIDON 3.

Le rôle de l'image codée est de définir avec précision un instant auquel une opération particulière doit être déclenchée.

Cet instant est par exemple celui du début ou de la fin d'un film, ou celui d'introduction d'un sous-titre par le système ANTIOPE ou d'émission d'un signal EPEOS, etc. Le décodeur est l'organe qui détecte l'apparition du code et permet de commander à l'instant en question le déclenchement de l'opération appropriée.

De tels moyens évitent qu'une personne soit contrainte de surveiller en permanence le programme pour déclencher aux instants appropriés l'émission des données, informations ou codes désirés.

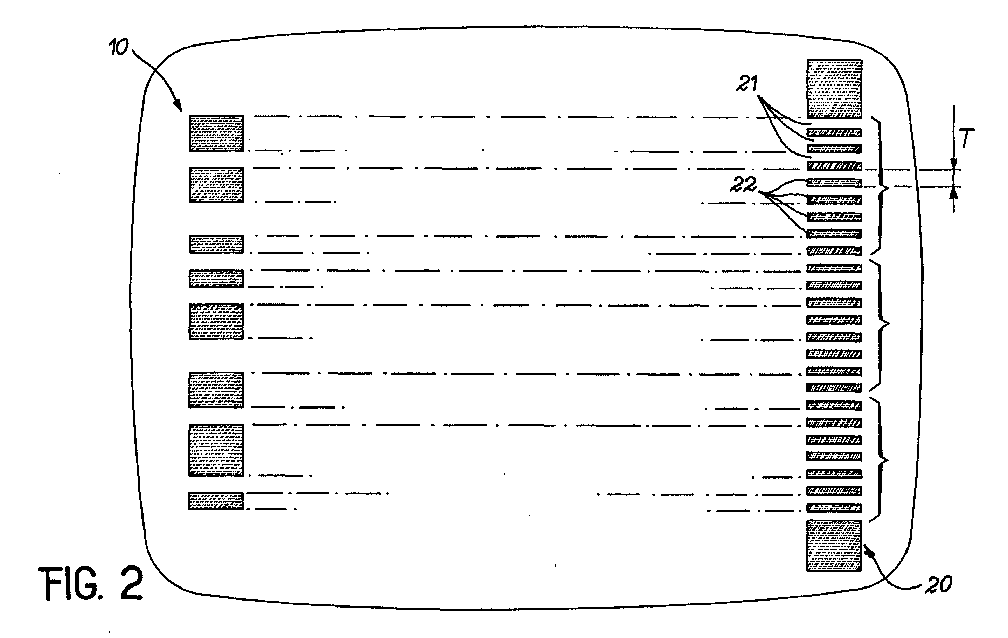

La figure 2 représente une image télévisée avec son code de repérage conforme à l'invention. Ce code est constitué de deux bandes verticales 10 et 20, la première située sur la partie gauche de l'image et la seconde sur la partie droite. Cette dernière est constituée par une suite périodique de zones blanches 21 et noires 22, chaque zone s'étendant sur un certain nombre de lignes de balayage (par exemple dix lignes). Deux zones consécutives blanche et noire définissent une « période » T. Un tel signal qui, par sa périodicité représente une horloge, s'étend de préférence sur un multiple de huit périodes et par exemple sur vingt-quatre périodes (cas illustré) soit au total $24 \times 10 = 240$ lignes de balayage dans l'exemple considéré.

La bande de gauche 10 est constituée elle aussi de zones blanches ou noires, chaque zone élémentaire correspondant en hauteur à une période d'horloge. Une telle zone constitue donc un élément binaire (eb) d'information. Dans le cas illustré les deux premiers ebs sont noirs, le troisième est blanc, les deux suivants sont noirs, etc.

De préférence, et comme pour le signal d'horloge, la zone de gauche s'étend sur un multiple de huit ebs (par exemple sur 24 ebs), de sorte que le signal de données se présente sous forme d'octets (trois dans l'exemple considéré). Ces octets peuvent avantageusement être conformes au code ASCII (« American Standard Code for Information Interchange »).

Le code de repérage de l'invention contient donc à la fois les données proprement dites de repérage et le signal d'horloge correspondant.

On observera que la partie centrale de l'image n'est pas affectée par le code décrit, ce qui rend quasi nulle la gêne apportée à la diffusion du programme. En outre, comme le code en question n'est présent que sur une seule image (c'est-à-dire sur deux trames consécutives), le téléspectateur non averti ne s'aperçoit pas de son apparition. L'aspect de l'image est d'autant moins perturbé que les récepteurs de télévision domestiques possèdent en général un balayage qui déborde les limites de l'écran, de sorte que les deux bandes verticales 10 et 20 tombent en grande partie en dehors de celui-ci.

A titre explicatif, les plages de données 10 et d'horloge 20 peuvent avoir une largeur correspondant à une durée de balayage de 3 microsecondes. Le début du signal de données peut se situer à 10,5 microsecondes environ du front avant de l'impulsion de synchronisation de ligne et le début du signal d'horloge à environ 59 microsecondes de ce même front. La surface occupée par les deux bandes représente alors environ 16 % de l'image totale.

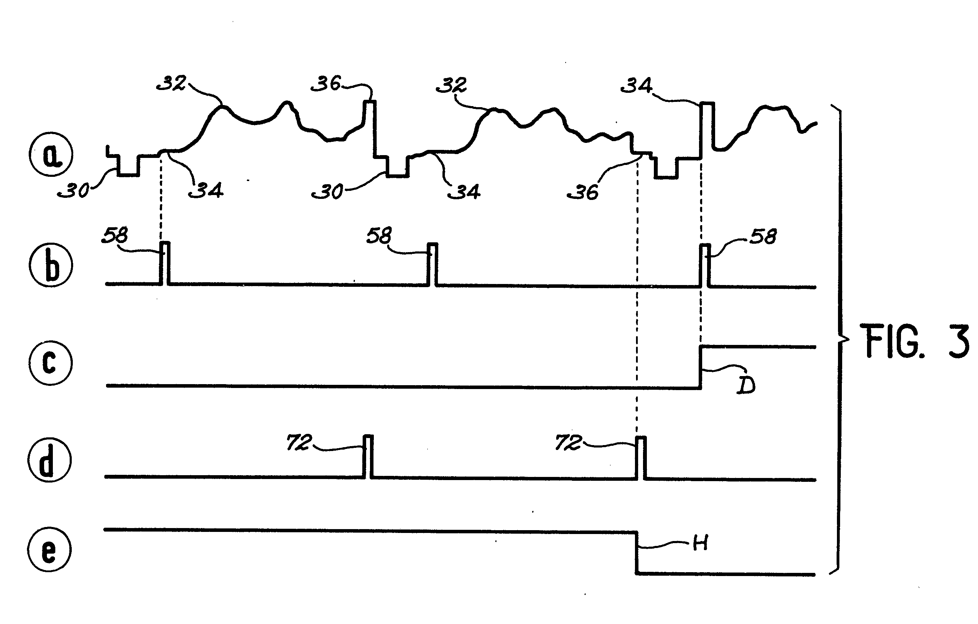

La figure 3 représente, dans la partie a, l'allure d'un signal vidéo permettant l'obtention d'une image comme celle de la figure 2. On reconnaît, dans ce signal, des impulsions de synchronisation de ligne 30 et des signaux de luminance (ou de chrominance) 32. Il s'y superpose, selon l'invention, des signaux 34 de données situés en début de ligne et des signaux 36 d'horloge situés en fin de ligne. Dans l'exemple illustré, les deux premiers signaux de données sont à un niveau bas (correspondant à un noir) et le troisième est à un niveau haut (correspondant à un blanc). On est donc en présence d'une transition de « 0 » à « 1 » avec la convention noir = 0, blanc = 1. Quant au signal d'horloge, il est tout d'abord à un niveau haut (correspondant à un blanc) puis passe à un niveau bas (correspondant à un noir). On est donc en présence d'une transition de « 1 » à « 0 », avec la même convention.

Les lignes b et c de la figure 3 seront décrites ultérieurement à propos du circuit de décodage.

Les moyens pour insérer dans un signal de télévision de tels signaux peuvent être soit électroniques, soit faire appel à un montage d'images correspondantes dans les films.

Les moyens électroniques peuvent être du type des « truqueurs » vidéo utilisés dans les régies de télévision et qui permettent de substituer à des portions d'images des informations différentes par découpage de l'image originale.

La description qui suit se référera surtout aux moyens de décodage qui sont placés en amont des sources de données et qui ont pour fonction de détecter la présence d'un code déterminé dans l'image télévisée reçue.

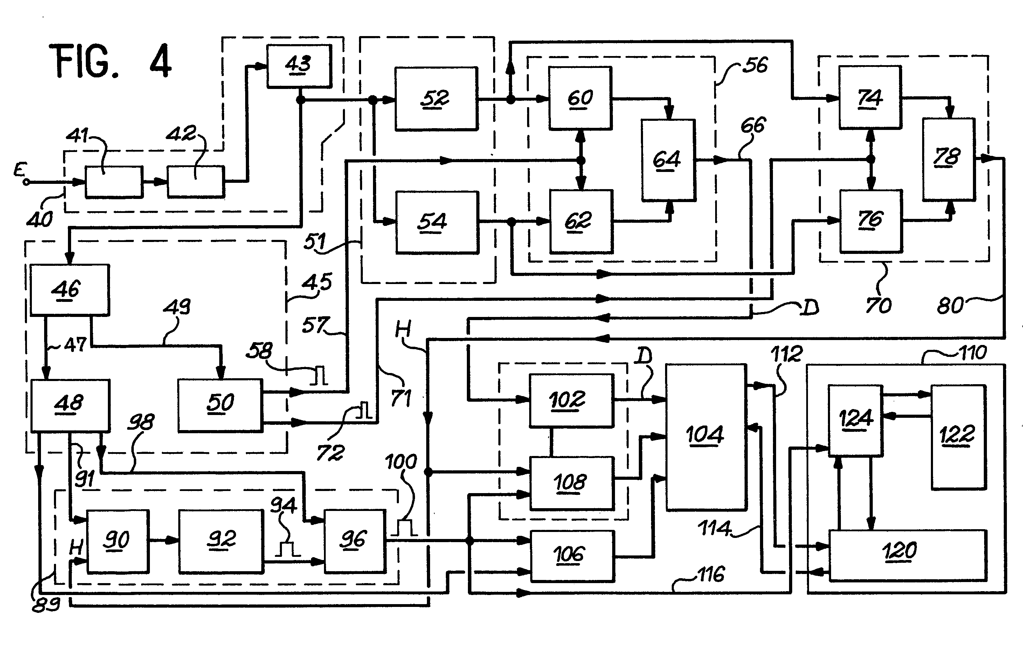

Ces moyens de décodage sont représentés de manière synoptique sur la figure 4. Ils comprennent d'abord un circuit d'entrée 40 constitué par une entrée de signal vidéo E, un amplificateur vidéo 41, un filtre passe-bas 42 et un circuit d'alignement 43. Ce circuit délivre un signal dirigé d'une part vers un circuit 45 et, d'autre part, vers un circuit de comparaison 51.

Le circuit 45 comprend :
— un circuit 46 d'extraction des signaux de synchronisation de trame (délivrés sur une connexion 47) et de ligne (délivrés sur une connexion 49) ;
— une base de temps verticale 48 recevant les signaux de synchronisation de trame ;
— une base de temps horizontale 50 recevant les signaux de synchronisation de ligne. Cette base de temps délivre sur une connexion 57 une impulsion 58 d'échantillonnage de données correspondant au début des lignes de balayage et sur une connexion 71 une impulsion 72 d'échantillonnage d'horloge correspondant à la fin des lignes.

Le circuit de comparaison 51 comprend :
— un premier comparateur 52 apte à détecter un niveau de signal correspondant à une zone noire ;
— un second comparateur 54 apte à détecter un niveau de signal correspondant à une zone blanche.

Le circuit de comparaison 51 est suivi :
— d'un premier circuit 56 d'échantillonnage et de mémorisation des données, composé de deux bascules 60 et 62 reliées aux comparateurs 52 et 54 et commandées par l'impulsion 58 véhiculée par la connexion 57, et d'une troisième bascule 64 délivrant sur une sortie 66 un signal de donnée mémorisé D ;
— d'un second circuit 70 d'échantillonnage et de mémorisation de l'horloge, composé de deux bascules 74 et 76 reliées aux comparateurs 52 et 54 et commandées par l'impulsion 72 véhiculée par la connexion 71, et par une troisième bascule 78 délivrant sur une sortie 80 un signal d'horloge mémorisé H.

Le circuit de décodage de la figure 4 comprend en outre un circuit de contrôle d'horloge 89 constitué par :
— un circuit 90 de contrôle du signal H délivré par la bascule 78, ce circuit étant commandé par la base de temps verticale 48 à laquelle il est relié par une connexion 91 ;
— un décompteur 92, dont le contenu initial est égal par exemple à 24, et qui délivre une impulsion 94 lorsqu'un signal d'horloge complet (vingt-quatre périodes) est détecté dans une trame ;
— un circuit 96 d'autorisation, qui reçoit de la base de temps verticale 48, par une connexion 98, une impulsion correspondant à une fenêtre déterminée et qui délivre à sa sortie une impulsion 100 indiquant la présence d'une salve d'horloge sans ladite fenêtre.

Le circuit de décodage représenté comprend encore des moyens de traitement des données constitués par :

— un circuit 102 d'insertion d'un octet de service entre deux groupes d'octets de données correspondant à deux trames successives d'une image ; ce circuit reçoit les données D mémorisées délivrées par la bascule 64 ;

— une mémoire 104, par exemple du type FIFO (First-In-First-Out), enregistrant les deux groupes d'octets de données et l'octet de service intercalé ;

— un circuit 106 de commande de l'effacement de cette mémoire 104 à la fin de chaque trame, ce circuit étant inhibé par l'impulsion 100 émanant du circuit 96 ;

— un circuit 108 d'autorisation de passage des signaux d'horloge mémorisés H délivrés par la bascule 18 ;

— un microprocesseur 110 relié à la mémoire 104 par des connexions 112 et 114 et au circuit 96 par une connexion 116, qui lui délivre l'impulsion 100 indiquant la présence d'une salve d'horloge. Ce microprocesseur comprend un circuit d'entrée-sortie 120, une mémoire de programme 122 et une unité centrale de traitement 124.

Le fonctionnement du circuit de décodage de la figure 4 est le suivant.

Le signal vidéo en provenant de la source d'image (non représentée) attaque l'amplificateur vidéo 41 de gain égal par exemple à 2. Il passe ensuite à travers le filtre passe-bas 42, qui atténue toutes les fréquences supérieures à 3 MHz. Le circuit 43 réalise un alignement dynamique du signal en prenant pour base de référence les fonds des signaux de synchronisation.

Les circuits 52 et 54 sont des comparateurs dont la sortie est à 0 ou à 1 selon que l'amplitude du signal présent à l'entrée est égale ou supérieure à une référence donnée, ce qui permet de déterminer les parties sombres et claires d'une image.

Le circuit 52 traite les signaux correspondant aux parties sombres et le circuit 54 ceux qui correspondent aux parties claires.

Le circuit 46 reçoit le signal vidéo et en extrait les signaux de synchronisation qu'il sépare ensuite en synchronisation horizontale et synchronisation verticale.

La base de temps horizontale 50 produit les impulsions 58 et 72 d'échantillonnage du signal vidéo, impulsions qui sont nécessaires aux circuits 60 et 62 (pour les données) et 74 et 76 (pour l'horloge). Ces impulsions dont la phase par rapport à la synchronisation horizontale doit être très précise, sont obtenues par comptage à partir d'une horloge à 1 MHz asservie à la synchronisation horizontale par un système à boucle à verrouillage de phase de type connu.

Le fonctionnement des moyens d'échantillonnage et de mémorisation est illustré par les lignes *b* à *e* de la figure 3.

Sur la ligne *b* figurent les impulsions 58 d'échantillonnage de données. Ces impulsions sont situées en début de ligne immédiatement après l'impulsion de synchronisation de ligne. Les bascules 60 et 62 gardent en mémoire l'état du signal de données pendant une ligne et la bascule 64 émet un créneau de tension sur sa sortie 66 lorsqu'apparaît une transition de 0 à 1 sur le signal de donnée (signal de la ligne *c*).

Sur la ligne *d* figurent les impulsions 72 d'échantillonnage des signaux d'horloge. Elles sont situées en fin de ligne. Les bascules 74 et 76 gardent elles aussi en mémoire l'état du signal d'horloge pendant une ligne et la bascule 78 délivre sur sa sortie 80 un créneau de tension lorsqu'une transition de 1 à 0 apparaît dans le signal d'horloge (ligne *e*).

L'ensemble des circuits 60, 62, 64 et 74, 76, 78 constitue donc des dispositifs d'échantillonnage et de mémorisation dont la sortie ne change d'état que lors des passages du signal vidéo du noir au blanc et vice versa, les transitions de plus faible amplitude du signal vidéo n'étant pas prises en compte.

La base de temps verticale 48 élabore, à partir de compteurs, des signaux correspondants dans l'image codée, au début et à la fin de la salve d'horloge. Ceci permet d'éliminer tous les signaux reçus en dehors de cette fenêtre.

Le circuit 90 reçoit le signal d'horloge H véhiculé par la connexion 80 et n'autorise son passage qu'à l'intérieur de la fenêtre en question.

Le circuit 92 vérifie, par décomptage, que le nombre de périodes d'horloge tombées dans cette fenêtre est correct. Pour cela, il est mis à 24 à chaque début de trame et s'il décompte 24 périodes d'horloge pendant le temps autorisé par 90, il délivre une impulsion 94. Cette impulsion est à son tour autorisée par le circuit 96 si elle se produit dans un créneau de temps déterminé par 48.

Le circuit 106 contrôle l'effacement des informations stockées dans la mémoire 104. Cet effacement a lieu à chaque fin de trame, sauf lorsque 106 reçoit de 96 l'impulsion 100 indiquant la présence d'une salve d'horloge présumée significative. Dans ce cas, en effet, mais seulement dans ce cas, les données entrées dans la mémoire 104 doivent être conservées en vue de leur traitement.

Les circuits 102 et 108 insèrent un octet de service entre les deux blocs de trois octets correspondant aux deux trames de repérage, cet octet étant destiné à la resynchronisation du logiciel de décodage utilisé par le microprocesseur 110. Il peut s'agir d'un octet dont tous les éléments binaires sont nuls.

La mémoire 102 reçoit les données D en série du circuit 56. Elle est lue lorsque le microprocesseur 110 reçoit, par la connexion 116, l'impulsion 100 indiquant la présence d'une salve d'horloge présumée bonne.

Le microprocesseur mesure la durée de l'impulsion 100. Si elle n'est pas conforme à une valeur inscrite dans le programme, l'ensemble est remis en position d'attente. On s'affranchit ainsi d'éventuelles impulsions parasites. S'il y a conformité, le transfert de données, de la mémoire 102 vers le microprocesseur 110, commence, rythmé par un dialogue entre les deux organes utilisant les liaisons 112 et 114.

Les informations inscrites sur l'image codée peuvent constituer, comme il est dit précédemment, un groupe de trois octets représentant trois caractères alphanumériques suivant le code ASCII. Ces trois caractères peuvent être, par exemple, les trois lettres D, E, B indiquant le début d'une émission, ou les trois lettres F, I, N indiquant la fin de cette émission. Dans d'autres exemples les trois caractères peuvent être D, 1, 2 ou F, 1, 2, pour repérer le début et la fin d'un programme portant le numéro 12.

La mémoire de programme 122 contient notamment les codes correspondant aux différents groupes de trois caractères pouvant se trouver sur une image codée, et dans le premier exemple pris ce sont les deux groupes D, E, B et F, I, N.

Lorsque, par la liaison 112, un octet représentant un caractère est transféré dans le microprocesseur 110, le programme le compare au premier caractère du premier groupe inscrit dans la mémoire de programme 122, puis au deuxième caractère au cas où le résultat de la première comparaison serait négatif. Si la deuxième comparaison est négative, le programme se met en attente de l'octet de service pour ensuite tester le deuxième groupe de trois octets. Si la comparaison est positive, le programme se poursuit par le transfert, suivi de comparaison, du deuxième, puis du troisième octet contenu dans la mémoire 102.

Quand trois caractères consécutifs du même groupe ont ainsi été « reconnus », le microprocesseur 110 délivre un signal significatif. Il peut s'agir par exemple d'un saut dans le programme pour produire un code particulier du système EPEOS.

## Revendications

1. Système de télévision comprenant un moyen pour superposer à l'une des images à téléviser un code de repérage et un décodeur apte à détecter la présence de ce code dans les images, caractérisé en ce que ledit code de repérage est formé par une première bande verticale (20) constituée d'une suite périodique de zones alternativement blanches (21) et noires (22), cette bande étant située le long d'un des bords latéraux de l'image et par une seconde bande verticale (10) constituée d'une suite de zones blanches ou noires s'étendant chacune sur une hauteur égale à la période de ladite suite formée par la première bande, cette seconde bande étant située le long de l'autre bord latéral de l'image, le signal vidéo correspondant à une image ayant reçu un tel code comprenant ainsi des signaux de noir ou de blanc situés en début et en fin de ligne de balayage, et en ce que le décodeur (6) comprend un circuit (45, 56, 70) pour détecter, dans le signal vidéo qu'il reçoit, la présence de signaux de blanc et de noir situés en début et en fin de ligne, et pour reconnaître, à partir des signaux ainsi détectés, la présence dudit code et émettre un ordre de commande.

2. Système selon la revendication 1, caractérisé en ce que le décodeur (6) comprend des moyens (89) pour détecter la présence d'un signal correspondant à la première bande périodique et pour autoriser le fonctionnement des moyens de reconnaissance du signal correspondant à la seconde bande.

3. Système selon la revendication 1, caractérisé en ce que le signal d'horloge formant la bande de droite (20) sur l'image comprend des groupes de huit périodes et en ce que le signal de données formant la bande de gauche (10) comprend autant d'octets représentant des caractères alphanumériques conformes au code ASCII.

4. Système selon la revendication 3, caractérisé en ce que les moyens pour extraire les signaux du code du signal vidéo reçu comprennent :
— un circuit (46) pour extraire du signal vidéo reçu des signaux de synchronisation de trame et de ligne ;
— une base de temps verticale (48) commandée par les signaux de synchronisation de trame ;
— une base de temps horizontale (50) commandée par les signaux de synchronisation de ligne, cette base de temps émettant des impulsions (58) en début de ligne et (72) en fin de ligne ;
— un circuit (56) d'échantillonnage et de mémorisation de signaux de données commandé par les impulsions (58) de la base de temps horizontale (50) ;
— un circuit (70) d'échantillonnage et de mémorisation des signaux d'horloge commandé par les impulsions (72) de la base de temps horizontale (50).

5. Système selon la revendication 4, caractérisé en ce que les moyens pour détecter la présence d'un signal correspondant à la première bande périodique comprennent :
— un circuit (90) contrôlant que le signal délivré par le second circuit (70) tombe dans une fenêtre définie par la base de temps (48) ;
— un décompteur (92) relié au circuit (90) et délivrant une impulsion (94) indiquant la présence d'un nombre d'impulsions d'horloge correct ;
— un circuit (96) d'autorisation commandé par la base de temps verticale (48).

6. Système selon la revendication 5, caractérisé en ce que les moyens pour reconnaître la présence d'un signal correspondant à la seconde bande comprennent :
— un circuit d'insertion (102, 108) d'un octet de service entre deux groupes d'octets de données correspondant aux deux trames successives de l'image codée ;

— une mémoire (104) enregistrant les deux groupes d'octets de données et l'octet de service ;

— un circuit (106) de commande d'effacement de la mémoire (104) à la fin de chaque trame, ce circuit étant inhibé par l'impulsion (100) émanant du circuit d'autorisation (96) ;

— un microprocesseur (110) relié à la mémoire (104), ce microprocesseur comprenant un circuit d'entrée-sortie (120), une mémoire de programmes (122), et une unité centrale de traitement (124), ce microprocesseur étant apte à effectuer des comparaisons entre chaque octet lu dans la mémoire (104) et des octets prédéterminés.

7. Système selon l'une quelconque des revendications 1 à 6, caractérisé en ce qu'il est adapté au service EPEOS (Enregistrement Programmé des Emissions sur Ordre des Sources).

**Claims**

1. Television system comprising a means for imposing a marking code upon an image to be televised, and a decoder adapted to detect the presence of said code in said image, characterized in that said marking code is formed by a first vertical band (20) comprising a periodic sequence of alternating white (21) and black zones (22), said band being located lengthways of one of the lateral borders of the image, and by a second vertical band (10) comprising a sequence of white and black zones each extending over a height equal to the period of said sequence formed by the first band, said second band being located lengthways of the other lateral border of the image, the video signal corresponding to an image having received such a code thereby comprising black or white signals at the beginning and at the end of a scanning line, and in that the decoder (6) comprises a circuit (45, 56, 70) for detecting the presence of black and white signals at the beginning and end of a line of the video signal being received, for recognising the presence of said code in the signals thereby detected, and for emitting a command order.

2. System according to claim 1, characterized in that the decoder (6) comprises means (89) for detecting the presence of a signal corresponding to the first periodic band, and for commanding the operation of recognition means for a signal corresponding to the second band.

3. System according to claim 1, characterized in that the clock signal forming the right-hand band (20) on the image comprises groups of eight periods, and in that the data signal forming the left-hand band (10) comprises as many octets representing alpha-numeric characters conforming to the ASCII code.

4. System according to claim 3, characterized in that the means for extracting coded signals from a received video signal comprise :

— a circuit (46) for extracting frame- and line-synchronization signals from a received video signal,

— a vertical time base (48) commanded by the frame-synchronization signals,

— a horizontal time base (50) commanded by the line-synchronization signals, said time base emitting pulses (58) at the beginning of a line, and (72) the end of a line,

— a circuit (56) for sampling and memorizing data signals commanded by the pulses (58) from the horizontal time base (50), and

— a circuit (70) for sampling and memorizing clock signals commanded by the pulses (72) of the horizontal time base (50).

5. System according to claim 4, characterized in that the means for detecting the presence of a signal corresponding to the first periodic band comprise :

— a circuit (90) controlling that the signal delivered by the second circuit (70) falls in a window defined by the time base (48),

— a counter (92) connected to circuit (90) and delivering a pulse (94) indicating the presence of a correct number of clock pulses, and

— an authorization circuit (96) commanded by the vertical time base (48).

6. System according to claim 5, characterized in that the means for recognizing the presence of a signal corresponding to the second band comprise ;

— a circuit (102, 108) for insertion of a service octet between two groups of data octets corresponding to two successive frames of a coded image,

— a memory (104) registering the two groups of data octets and the service octet,

— a circuit (106) for commanding erasure of the memory (104) at the end of each frame, said circuit being inhibited by pulses (100) emitted by authorization circuit (96), and

— a microprocessor 110 connected to memory (104), said microprocessor comprising an input-output circuit (120), a programme memory (122), and a central processing unit (124), said microprocessor being adapted to effect comparisons between each octet read into the memory (104) and predetermined octets.

7. System according to any one of claims 1 to 6, characterized in that it is adapted to the EPEOS service (Enregistrement Programmé des Emissions sur Ordre des Sources — [Programmed Registration of Signals in Order of Sources]).

**Ansprüche**

1. Fernsehsystem, mit einer Einrichtung zum Überlagern eines zu sendenden Bildes mit einem Kennstrich-Kode und einem Dekoder, mit dem das Vorhandensein dieses Kodes in den Bildern feststellbar ist, dadurch gekennzeichnet, daß der Kennstrich-Kode von einem ersten, senkrechten Band (20), welches von einer periodischen Folge abwechselnd weißer (21) und schwarzer (22) Bereiche gebildet ist, wobei dieses Band längs eines der Seitenränder des Bildes angeordnet ist, und von einem zweiten senkrechten Band (10) gebildet ist, welches von einer Folge weißer und schwarzer Bereiche gebildet ist, von denen sich jeder auf der gleichen Höhe mit der Periode der von dem ersten Band gebildeten Folge erstreckt, daß sich dieses zweite Band längs des anderen seitlichen Randes des Bildes befindet, daß das Videosignal, welches einem Bild entspricht, das einen solchen Kode erhalten hat, somit Schwarz- und Weißsignale enthält, die am Anfang und am Ende einer Bildzeile angeordnet sind, und daß der Dekoder (6) eine Schaltungsanordnung (45, 56, 70) umfaßt, um in dem erhaltenen Videosignal das Vorhandensein von Weiß- und Schwarzsignalen, die am Anfang und am Ende der Zeile angeordnet sind, festzustellen und um ausgehend von den so festgestellten Signalen das Vorhandensein des Kodes zu erkennen und einen Steuerbefehl abzugeben.

2. System nach Anspruch 1, dadurch gekennzeichnet, daß der Dekoder (6) Mittel (89) umfaßt, um das Vorhandensein eines Signals festzustellen, welches dem ersten, periodischen Band entspricht, und den Betrieb der Mittel zum Erkennen des Signals zuzulassen, welches dem zweiten Band entspricht.

3. System nach Anspruch 1, dadurch gekennzeichnet, daß das Taktsignal, welches das rechte Band (20) auf dem Bild bildet, Gruppen von acht Perioden umfaßt, und daß das Datensignal, welches das linke Band (10) bildet, ebenso viel Oktette umfaßt, die die alphanumerischen Zeichen gemäß dem Kode ASCII darstellen.

4. System nach Anspruch 3, dadurch gekennzeichnet, daß die Mittel zum Abtennen der Signale des Kodes des empfangenen Videosignals umfassen :
— eine Schaltungsanordnung (46), um aus dem empfangenen Videosignal das Zeilengleichlaufsignal und das Teilbildsynchronsignal auszublenden,
— eine von dem Teilbildsynchronsignal gesteuerte, vertikale Zeitbasis (48),
— eine von dem Zeilengleichlaufsignal gesteuerte, horizontale Zeitbasis (50), wobei diese Zeitbasis Impulse (58) am Beginn der Zeile und (72) am Ende der Zeile abgibt,
— eine von den Impulsen (58) der horizontalen Zeitbasis (50) gesteuerte Schaltungsanordnung (56) zum Abtasten und Speichern der Datensignale,
— eine von den Impulsen (72) der horizontalen Zeitbasis gesteuerte Schaltungsanordnung (70) zum Abtasten und Speichern der Taktsignale.

5. System nach Anspruch 4, dadurch gekennzeichnet, daß die Mittel zum Feststellen des Vorhandenseins eines dem ersten, periodischen Band entsprechenden Signals umfassen :
— eine Schaltungsanordnung (90), welche überprüft, ob das von der zweiten Schaltungsanordnung (70) gelieferte Signal in einem durch die Zeitbasis (48) festgelegten Fenster liegt,
— einen Zwischenzähler (92), der mit der Schaltungsanordnung (90) verbunden ist und einen Impuls (94) abgibt, welcher das Vorliegen einer korrekten Anzahl von Taktimpulsen anzeigt,
— eine von der vertikalen Zeitbasis (48) gesteuerte Autorisierungsschaltung (96).

6. System nach Anspruch 5, dadurch gekennzeichnet, daß die Mittel zum Feststellen des Vorliegens eines dem zweiten Band entsprechenden Signals umfassen :
— einen Schaltkreis (102, 108) zum Einfügen eines Organisationsoktettes zwischen zwei Gruppen von Datenoktetten, die zwei aufeinanderfolgenden Teilbildern des kodierten Bildes entsprechen,
— einen Speicher (104), welcher die zwei Gruppen von Datenoktetten und das Organisationsoktett speichert,
— eine Steuerschaltung (106) zum Löschen des Speichers (104) am Ende eines jeden Halbbildes, wobei diese Schaltung durch den Impuls (100) gesperrt ist, welcher von der Autorisierungsschaltung (96) abgegeben wird,
— einen mit dem Speicher (104) verbundenen Mikroprozessor (110), welcher eine Eingang-Ausgang-Schaltung (120), einen Programmspeicher (122) und eine zentrale Verarbeitungseinheit (124) umfaßt, wobei der Mikroprozessor Vergleiche zwischen jedem aus dem Speicher (104) gelesenen Oktett und vorbestimmten Oktetten durchführen kann.

7. System nach irgendeinem der Ansprüche 1 bis 6, dadurch gekennzeichnet, daß es an den Betrieb von EPEOS (Enregistrement Programmé des Emissions sur Ordre des Sources) angepaßt ist.

FIG. 1

0 035 436

FIG. 2

FIG. 3

FIG. 4